# EUROPEAN PATENT APPLICATION

(11) **EP 1 830 203 A1**
(43) Date of publication of application: **05.09.2007**
(21) Application number: 07004261.9
(22) Date of filing: 01.03.2007
(51) Int. Cl.: G02B 5/02, G02F 1/1335

(54) **Optical substrate comprising boron nitrade particles**

(30) Priority: 01.03.2006 US 777917 P; 07.12.2006 US 869107 P; 03.01.2007 US 618968
(71) Applicant: Momentive Performance Materials Inc., Wilton CT 06897-4122 (US)
(72) Inventor: Yamada, Masako, Niskayuna NY 12309 (US); Butts, Matthew David, Rexford NY 12148 (US); Sinha, Moitreyee, Niskayuna NY 12309 (US); Genovese, Sarah Elizabeth, Delmar NY 12054 (US); Lelonis, Donald, Strongsville OH 44149-2128 (US); Andersen, Cynthia, Cleveland OH 44111 (US)
(74) Representative: Zimmermann, Gerd Heinrich

(57) **Abstract**

Optical substrates such as films and sheets, and methods for making optical substrates are described. The optical substrates contain at least one layer that contains glass or polymeric materials and boron nitride particles. The boron nitride particles have the requisite optical properties as well as excellent thermal conductivity, thus minimizing the potential for cracks, waves and wrinkles due to excess heat generated in applications such as liquid crystal displays, projection displays, traffic signals, and illuminated signs.

## Description

### FIELD OF THE INVENTION

The present invention relates to an optical substrate comprising boron nitride particles. In one embodiment, the invention relates to an optical film or sheet with boron nitride particles for excellent thermal conductivity properties. In another embodiment, the invention relates to an optical film or sheet comprising boron nitride particles that manipulate light.

### BACKGROUND OF THE INVENTION

In recent years, traditional cathode ray tube (CRT) displays have been gradually replaced by liquid crystal displays (LCDs), which are light-weight, thin, small in size and almost radiation free. LCDs are also characterized as having low heat generation and low power consumption. Various kinds of optical films, such as polarizer films, retardation films, and diffuser films are layered LCDs.

In one embodiment of optical films known in the art, the films are constructed from inclusions dispersed within a continuous matrix. The characteristics of these inclusions can be manipulated to provide a range of reflective and transmissive properties to the film. These characteristics include inclusion size with respect to wavelength within the film, shape, alignment, volumetric fill factor and the degree of refractive index mismatch within the continuous matrix along the film's three orthogonal axes.

In another embodiment of prior art optical films, the films feature optically clear hard coatings providing requisite brightness, diffusion properties and homogeneity of emitted light. In some embodiments of the prior art, the films employ a micro-roughened anti-Newton back coating to eliminate Moiré interference and a formulated front layer coating that is resistant to chemical and physical damage. In other embodiments, the optical film in the form of a polarizer film has a matte finish on the front side of the film, which acts as an integral diffuser to reduce the need for a separate diffuser sheet in the LCD assembly.

Although LCD panels have lower heat and power consumption compared to the traditional CRT displays, there is still a significant amount of heat generated in the LCD which may cause wrinkles, waves and / or cracks in the optical films, and thus adversely affect their optical properties or cosmetic appearance.

There continues to be a need for optical substrates, i.e., films and sheets, with improved thermal conductivity, thus minimizing the potential for cracks, waves and wrinkles due to excess heat generated in LCDs. The present invention now provides optical substrates with the requisite thermal conductivity properties to minimize the heat generation problem in LCDs, with dispersions having improved thermal conductivity compared to the dispersions in the prior art.

### SUMMARY OF THE INVENTION

In one aspect of the invention, an optical substrate is provided. The optical substrate contains at least a layer of polymeric or glass matrix comprising boron nitride particles. The boron nitride particles are present in an amount ranging from 0.1 to 10 wt. % based on the total weight of the layer.

The invention further relates to a backlight display device in one embodiment comprises: an optical source for generating light, a light guide for guiding the light, a reflective device positioned along the light guide for reflecting the light out of the light guide, a reflective film behind the light guide to reflect escaped light from the cavity back into the light guide, and a series of optical films receptive of the light from the light guide, including a diffuser film. A backlight display device in another embodiment comprises several optical sources for generating light, a light diffusing plate, a reflective film placed behind the light sources to reflect escaped light from the cavity back into the light diffusing plate, and a series of optical films receptive of the light from the light diffusing plate, including a diffuser film. The diffuser film comprises about 95 to about 99.8 wt. % of a polymer for a base matrix and about 0.2 to about 5 wt. % boron nitride particles.

### DESCRIPTION OF THE INVENTION

As used herein, approximating language may be applied to modify any quantitative representation that may vary without resulting in a change in the basic function to which it is related. Accordingly, a value modified by a term or terms, such as "about" and "substantially," may not be limited to the precise value specified in some cases.

The recitation of numerical ranges by endpoints includes all numbers subsumed within that range (e.g. 1 to 5 includes 1, 1.5, 2, 2.75, 3, 3.80, 4, and 5).

As used in this specification and the appended claims, the singular forms "a", "an", and "the" include plural referents unless the content clearly dictates otherwise. Thus, for example, reference to a composition containing "a compound" includes a mixture of two or more compounds. Also as used herein and unless otherwise indicated, singular elements may be in the plural and vice versa with no loss of generality.

As used in this specification and the appended claims, the term "or" is generally employed in its sense including "and / or" unless the content clearly dictates otherwise.

As used herein, the term "optical substrate" refers to a sheet, a thin film or layer with optical properties. In one embodiment, the optical substrate is for use in an optical component such as a lens, a mirror, an LCD panel, an LCD backlight unit etc., designed to exhibit desired aesthetic optical effects, reflection, transmission, absorption, or refraction of light upon exposure to a specific band of wavelengths of electromagnetic energy. Also as used herein, "optical films" may be used interchangeably with "optical substrates."

The term "polymer" will be understood to include polymers, copolymers (i.e., polymers formed using two or more different monomers), oligomers and combinations thereof, as well as polymers, oligomers, or copolymers that can be formed into a miscible blend by, for example, coextrusion or reaction, including transesterification. Both block and random copolymers are included, unless indicated otherwise.

The term "refractive index" is defined herein as the absolute refractive index of a material which is understood to be the ratio of the speed of electromagnetic radiation in free space to the speed of the radiation in that material. The refractive index can be measured using known methods and is generally measured using an Abbe Refractometer in the visible light region.

The term "colloidal" is defined herein to mean particles (primary particles or associated primary particles) with a diameter less than about 200 microns.

The term "associated particles" as used herein refers to a grouping of two or more primary particles that are aggregated and/or agglomerated.

The term "aggregation" as used herein is descriptive of a strong association between primary particles which may be chemically bound to one another. The breakdown of aggregates into smaller particles is difficult to achieve.

The term "agglomeration" as used herein is descriptive of a weak association of primary particles which may be held together by charge, polarity, or other physical forces, and can be broken down into smaller entities.

The term "primary particle size" is defined herein as the size of a non-associated single particle.

The term "sol" is defined herein as a dispersion or suspension of colloidal particles in a liquid phase.

All percentages and ratios used herein are by weight of the total composition and all measurements made are at 25°C unless otherwise designated. Unless otherwise indicated all percentages, ratios and levels of ingredients referred to herein are based on the actual amount of the ingredient, and do not include solvent, fillers or other materials which may be combined with the ingredient in commercially available products.

Boron nitride is characterized as having excellent thermal conductivity, e.g., 59 W/m/K in the direction parallel to the pressing direction and 33 W/m/K in the direction perpendicular to the pressing direction (as measured in hot pressed BN shapes of approximately 90 to 95% of theoretical density). This compares to a thermal conductivity of 18 W/m/K (W/m*K) for alumina and 2 W/m/K for zirconia, fillers typically used in the optical substrates of the prior art. The optical substrate of the present invention contains at least a layer comprising boron nitride, e.g., in the film substrate itself, or as a component in the coating layer disposed on the film substrate, allowing the optical substrate to have the requisite optical properties as well as improved thermal conductivity compared to the prior art fillers.

In some embodiments, the optical properties of the optical substrate can be manipulated depending on the size of BN particles used. The use of very small BN particles in some embodiments, e.g., particles with an average primary particle size of about 10 - 50 nm or less, can enhance the refractive index (RI) of the optical film and allow the film to be used in applications such as brightness enhancement films. In a second embodiment with the use of slightly larger BN particles, e.g., BN particles having an average primary particle size of about 100 to 500 nm, the BN particles may diffuse / scatter light when used in a matrix having a sufficient RI difference, thus allowing the optical film to be used in applications such as volumetric diffusers. In yet a third embodiment with larger particle sizes, i.e., in the micron range, the BN fillers function as a surface scattering diffuser.

Boron nitride Component: Boron nitride (BN) used in the optical substrates of the present invention is commercially available from a number of sources, including but not limited to, BN materials from Momentive Performance Materials, Ceradyne ESK, Sintec Keramik, Kawasaki Chemicals, and St. Gobain Ceramics. BN can be in one of the following forms, or mixtures thereof, including: amorphous boron nitride (referred to herein as a-BN), boron nitride of the hexagonal system having a laminated structure of hexagonal-shaped meshed layers (referred to herein as h-BN with platelet-like particles), a turbostratic boron nitride having randomly-layered hexagonal-shaped meshed layers (referred to herein as t-BN), and spherical boron nitride. In one embodiment, the BN is in the form of turbostratic form, hexagonal form, spherical form, or mixtures thereof.

In one embodiment, the boron nitride filler comprises particles in the micron size range produced in a process utilizing a plasma gas as disclosed in US Patent No. 6,652,822. In another embodiment, the spherical BN filler comprises hBN powder as spherical boron nitride agglomerates formed from irregular non-spherical BN particles bound together by a binder and subsequently spray-dried, as disclosed in US Patent Publication No. US2001/0021740. In yet other embodiments, BN fillers are in the form of h-BN powder produced from a pressing process as disclosed in US Patent Nos. 5,898,009 and 6,048,511, BN agglomerated powder as disclosed in US Patent Publication No. 2005/0041373, BN powder having high thermal diffusivity as disclosed in US Patent Publication No. US20040208812A1, and highly delaminated BN powder as disclosed in US Patent No. 6,951,583.

In one embodiment, the BN powder has a surface area of 2 to 25 m²/g. In yet another embodiment, the filler is in the form of sub-micron boron nitride, i.e., boron nitride ("BN") powder having an average particle size of less than 1 micron (1000 nm) with surface area (measured using the BET method) of at least 100 m²/g. In yet another embodiment, the BN powder has a BET surface area of at least 450 m²/g. In a third embodiment, the BN is in the form of sub-micron powder with a BET surface area ranging from 200 to 900 m²/g. Sub-micron BN particles can be made using various methods known in the art. In one process, by combining chemical vapor deposition and pyrolysis of trimethoxyborane under an ammonia atmosphere, spherical boron nitride particles with a uniform diameter distribution from 50 to 400 nm can be synthesized. In a second process, sub-micron BN filler can be prepared by breaking agglomerates of commercially available BN powder (with sizes greater than 1 micron) through sonication of a liquid suspension of BN in water and surfactant in an ultrasonic bath. Sub-micron boron nitride powders are commercially available from a number of sources, including Momentive Performance Materials of Strongsville, OH.

In one embodiment, the BN powder has an average particle size of at least 50 microns (µm). In another embodiment, the BN powder has an average primary particle size of 0.10 to 200 µm. In yet another embodiment, the BN powder has an average particle size of 5 to 500 µm. In a fourth embodiment, from 10 to 100 µm. In a fifth embodiment, the BN powder has an average particle size of 1 to 30 µm. In a sixth embodiment, the BN powder comprises irregularly shaped agglomerates of hBN platelets, having an average particle size of above 10 µm.

In one embodiment, the BN powder is sub-micron having an average primary particle size in the range of 0.10 (100 nm) to 0.8 µm (800 nm). In a second embodiment, the BN powder has an average primary particle size of 200 nm to 700 nm. In a third embodiment, the BN powder has an average primary particle size of 200 to 600 nm. In a fourth embodiment, the BN powder has an average primary particle size of 200 to 500 nm. In a fifth embodiment, the sub-micron BN powder has an average primary particle size of less than 50 nm. In a sixth embodiment, e.g., for use in brightness enhancement films, the sub-micron BN powder has an average primary particle size of 5 to 50 nm.

In yet another embodiment, the BN powder is in the form of spherical agglomerates of hBN platelets. In one embodiment of spherical BN powder, the agglomerates have an average agglomerate size distribution (ASD) or diameter from 10 to 500 µm. In another embodiment, the BN powder is in the form of spherical agglomerates having an ASD in the range of 30 to 125 µm. In one embodiment, the ASD is 74 to 100 µm. In another embodiment, 10 to 40 µm.

In one embodiment, the BN powder is in the form of platelets having an average length along the b-axis of at least about 1 µm, and typically between about 1 and 20 µm, and a thickness of no more than about 5 µm. In another embodiment, the powder is in the form of platelets having an average aspect ratio of from about 50 to about 300.

In one embodiment, the BN is an h-BN powder having a highly ordered hexagonal structure with a crystallization index of at least 0.12. In another embodiment, the BN powder has a crystallinity of about 0.20 to about 0.55, and in yet another embodiment, from about 0.30 to about 0.55. In yet another embodiment, the BN has a crystallization index of at least 0.55. In one embodiment, the BN powder has an oxygen content in the range of 0.1 to 15 wt. %. In yet another embodiment, the BN powder is of sub-micron size having an oxygen content from 10 to 15 wt. %

In one embodiment, the boron nitride particles are functionalized or treated with a surface treatment agent. In general, a surface treatment agent has a first end that will attach to the particle surface (covalently, ionically or through strong physisorption) and a second end that imparts compatibility of the particle with the resin and/or reacts with the resin matrix of the optical film. Examples of surface treatment agents include but are not limited to organosilicon compounds such as silanes, silazanes, siloxanes, and the like; alcohols; amines; carboxylic acids; sulfonic acids; phospohonic acids; zirconates; and titanates.

The required amount of surface modifier is dependent upon several factors such as boron nitride particle size, particle type (spherical or platelets), modifier molecular weight, modifier type, and the surface treatment process. In one embodiment, the boron nitride is treated with silanes at elevated temperatures under acidic or basic conditions for from approximately 1-24 hr. prior to being used in the optical film composition.

In one embodiment, the boron nitride particles are first functionalized with carboxylic acid modifying agents containing oxygenated substituents, e.g., polyether carboxylic acids such as 2-[2-(2-methoxyethoxy)ethoxy]acetic acid (MEEAA), 2-(2-methoxyethoxy)acetic acid (MEAA), and mono(polyethylene glycol)succinate. In another embodiment, the BN particles are functionalized by non-polar modifying agents having carboxylic acid functionality include octanoic acid, dodecanoic acid, stearic acid, oleic acid, and combinations thereof. In some embodiments, the carboxylic acid can be reactive within a polymerizable organic matrix (e.g., the carboxylic acid has a polymerizable group). In other embodiments, the carboxylic acid includes both a carboxylic acid with a polymerizable group and a carboxylic acid that is free of a polymerizable group. Reactive carboxylic acid surface modifying agents (e.g., carboxylic acids with polymerizable groups) include, for example, acrylic acid, methacrylic acid, beta-carboxyethyl acrylate, mono-2-(methacryloxyethyl)succinate, and combinations thereof. A useful surface modification agent that can impart both polar character and reactivity to the BN particles is mono(methacryloxypolyethyleneglycol) succinate. This material may be particularly suitable for addition to radiation curable acrylate and/or methacrylate organic matrix materials.

In one embodiment, the boron nitride particles are firsts functionalized with a silane. Exemplary silanes include, but are not limited to, alkyltrialkoxysilanes such as n-octyltrimethoxysilane, n-octyltriethoxysilane, isooctyltrimethoxysilane, dodecyltrimethoxysilane, octadecyltrimethoxysilane, propyltrimethoxysilane, and hexyltrimethoxysilane; methacryloxyalkyltrialkoxysilanes or acryloxyalkyltrialkoxysilanes such as 3-methacryloxypropyltrimethoxysilane, 3-acryloxypropyltrimethoxysilane, and 3-(methacryloxy)propyltriethoxysilane; methacryloxyalkylalkyldialkoxysilanes or acryloxyalkylalkyldialkoxysilanes such as 3-(methacryloxy)propylmethyldimethoxysilane, and 3-(acryloxypropyl)methyldimethoxysilane; methacryloxyalkyldialkylalkoxysilanes or acyrloxyalkyldialkylalkoxysilanes such as 3-(methacryloxy)propyldimethylethoxysilane; mercaptoalkyltrialkoxylsilanes such as 3-mercaptopropyltrimethoxysilane; aryltrialkoxysilanes such as styrylethyltrimethoxysilane, phenyltrimethoxysilane, phenyltriethoxysilane, and p-tolyltriethoxysilane; vinyl silanes such as vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, and vinyltris(2-methoxyethoxy)silane; 3-glycidoxypropyltrialkoxysilane such as glycidoxypropyltrimethoxysilane; polyether silanes such as N-(3-triethoxysilylpropyl)methoxyethoxyethoxyethyl carbamate (PEG3TES), N-(3-triethoxysilylpropyl) methoxyethoxyethoxyethyl carbamate (PEG2TES), and SILQUEST A-1230); and combinations thereof.

In one embodiment, the BN powder has refractive indices ("RI") in plane (ab plane, perpendicular to c-axis) and thru plane (parallel to c-axis) of 1.65 and 2.13 respectively (as reported by T. Ishii and T. Sato, Growth of Single Crystals of Hexagonal Boron Nitride, Journal of Crystal Growth 61 (1983) 689-690). However, compared to the fillers of the prior art such as Poly(methyl methacrylate) and Tospearl^{®} Polymethylsilsesquioxane, the different refractive indices in different orientations allow boron nitride to have better birefringence properties compared to materials with a single refractive index.

In one embodiment, the BN powder is present in the optical film composition as a dispersion in a sufficient amount for the optical film to still have the requisite properties, e.g., refractive index, diffusivity, hardness, durability, etc, while at the same time increasing the thermal conductivity of the optical film by at least 10% compared to an optical film without the added boron nitride particles. In one embodiment, the BN powder is present in an amount of 0.1 to 10 wt. % of the total weight of the layer containing the BN powder. In a second embodiment, this amount ranges from 0.5 to 5 wt.%. In a third embodiment, wherein the BN powder is for use in an anti-reflection or diffuser film, the BN powder is present in amount ranging from 0.5 to about 8 wt. %, still allowing the film to have a sufficient light diffusion required by an anti-reflection film. In a fourth embodiment, the BN powder is present in an amount ranging from 0.2 to 5 wt. %, still allowing the film to have a refractive index of at least 1.50.

Base Matrix: The boron nitride particles may be incorporated in a matrix forming the optical substrate layer of the film. In yet another embodiment, the boron nitride particles are incorporated into a transparent coating disposed on a substrate layer of the optical film.

The substrate layer used in the inventive optical film may be any form and may comprise any material known to those skilled in the art, such as glass or plastic, in a range of 90 to about 99.8 wt. % of the total weight of the substrate layer. The plastic material in the optical layer can be any suitable material having a sufficiently high refractive index. The refractive index of the polymeric material is often at least 1.40, at least 1.45, or at least 1.50. There is no specific limitation on the material of said plastic substrate, possibilities for which include but are not limited to styrene-acrylonitrile, cellulose acetate butyrate, cellulose acetate propionate, cellulose triacetate, polyether sulfone, polymethyl methacrylate, polyurethane, polyester, polycarbonate, polyvinyl chloride, polystyrene, polyethylene terephthalate, polyimide, polyolefin resin, such as polyethylene (PE) or polypropylene (PP), polyethylene naphthalate, copolymers or blends based on naphthalene dicarboxylic acids, polycyclo-olefins, polyurethane resin; triacetate cellulose (TAC), or mixtures thereof. In one embodiment, the substrate matrix comprises a material selected from one of polyester resin, polycarbonate resin or mixtures thereof. In yet another embodiment, the substrate matrix comprises polyethylene terephthalate (PET).

In one embodiment, the boron nitride particles are incorporated in the transparent coating layer disposed on the substrate of the optical film. The polymeric matrix contained in the coating of the inventive optical film may be obtained by polymerizing any polymeric monomers suitable for manufacturing optical films known to those skilled in the art. Examples of suitable polymeric monomers include, for example, epoxy diacrylate, halogenated epoxy diacrylate, methyl methacrylate, isobomyl acrylate, 2-phenoxy ethyl acrylate, acrylamide, styrene, halogenated styrene, acrylic acid, acrylonitrile, methacrylonitrile, biphenylepoxyethyl acrylate, halogenated biphenylepoxyethyl acrylate, alkoxylated epoxy diacrylate, halogenated alkoxylated epoxy diacrylate, aliphatic urethane diacrylate, aliphatic urethane hexaacrylate, aromatic urethane hexaacrylate, bisphenol-A epoxy diacrylate, novolac epoxy acrylate, polyester acrylate, polyester diacrylate, acrylate-capped urethane oligomer or mixtures thereof. Preferred polymeric monomers include halogenated epoxy diacrylate, methyl methacrylate, 2-phenoxy ethyl acrylate, aliphatic urethane diacrylate, aliphatic urethane hexaacrylate, and aromatic urethane hexaacrylate. In one embodiment, the polymer matrix comprises a material selected from the group of polycarbonate, polyethylene terephthalate, poly(methyl methacrylate),epoxies, and acrylates. The selection of the polymer matrix for use with the BN fillers of the invention depends on a number of factors including the end use applications, the quality control of the resin, etc.

In one embodiment, the polymer matrix for the coating layer comprises a binder polymer selected from the group consisting of cellulose triacetate, polyethylene terephthalate, diacetyl cellulose, acetate butyrate cellulose, acetate propionate cellulose, polyethersulfone, poly(meth)acrylic-based resin, polyurethane-based resin, polyester, polycarbonate, aromatic polyamide, polyolefins, polymers derived from vinyl chloride, polyvinyl chloride, polysulfone, polyether, polynorbomene, polymethylpentene, polyether ketone and (meth)acrylonitrile. In yet another embodiment, the binder polymer is selected from an acrylic or methacrylic polymer. In a third embodiment, the binder polymer is a fluorine derivative of one of the aforementioned polymers, or mixtures thereof.

Optional Components: In addition to the light diffusing and thermally conductive boron nitride fillers, the optical film may also comprise other organic or inorganic diffusion components, or mixtures thereof, which do not significantly adversely affect the thermal conductivity and optical properties desired in the film. In one embodiment for a diffuser film, the film composition further comprises optional light diffusing organic materials including poly(acrylates); poly (alkyl methacrylates) such as poly(methyl methacrylate) (PMMA); poly (tetrafluoroethylene) (PTFE); silicones, for example hydrolyzed poly(alkyl trialkoxysilanes) available under the trade name TOSPEARL® from Momentive Performance Materials Inc.; and mixtures comprising at least one of the foregoing organic materials, wherein the alkyl groups have from one to about twelve carbon atoms. In another embodiment for a diffuser film, optional light diffusing inorganic materials include materials comprising antimony, titanium, barium, and zinc, for example the oxides or sulfides of the foregoing such as zinc oxide, antimony oxide and mixtures comprising at least one of the foregoing inorganic materials.

In yet another embodiment and in addition to the boron nitride fillers / optional diffusing components, the base substrate or coating film may contain additives known to those skilled in the art, such as levelling agent, photo-initiator, defoamer, antistatic agent, etc.

Methods for Making the Optical Film or sheet: In one embodiment, the components for use in the substrate of the optical film or sheet are first blended, melt-mixed, or melt-kneaded using methods and equipment which are well known in the art. In one embodiment, the components are prepared by mixing light-diffusing polycarbonate resins with boron nitride and optional diffusing additives, and then melt-kneading the mixture in a suitable extruder to form pellets. The pellets are then used to form the optical film or sheet of the present invention through conventional methods such as extrusion, injection molding, or solvent casting into light diffusing substrates for commerce. In one embodiment of the invention, the solvent casting method is used for forming a light diffusing film or sheet of low retardation. In embodiments wherein the optical film or sheet is further coated with a protective coating layer, the coating can be applied via roller coating, spray coating or screen-printing.

In another embodiment for an optical film or sheet, the base substrate (with or without the boron nitride fillers of the invention) is additionally coated with a coating film or sheet layer. The coating composition may be made by (a) first mixing a polymeric matrix, a photoinitiator, and filler particles (which may include the boron nitride fillers of the invention) to form a colloidal coating composition; (b) coating the colloidal coating composition onto the transparent substrate to form a coating; (c) optionally forming the coating into a light-focusing structure by means of roller embossment or hot extrusion; and (d) exposing the coating to an energetic ray, heat or both at normal temperature to cure the coating. In one embodiment, the coating curing is conducted by exposure to an energetic ray which initiates a photo-polymerization. The energetic ray refers to a light source in a certain wavelength range, such as UV-light, infrared light, visible light, heat ray (irradiation or radiation), and the like, preferably UV-light. Exposure intensity may be in the range of from 1 to 300 mJ/cm², preferably 10 to 100 mJ/cm².

In yet another embodiment wherein the inventive optical film or sheet is in the form of a coating layer, the coating layer is formed by preparing a coating composition comprising the boron nitride particles in a polymeric matrix, contacting the coating composition with a micro-replication tool; and lastly, polymerizing the coating composition to form the optical layer with a microstructured surface . The microstructured surface can have the function of manipulating brightness, luminance uniformity or viewing angle..

Applications and Properties of Inventive Optical Substrate: In one embodiment, the optical substrate of the invention is used in the various layered sheets or films that make up the LCD panel or LCD backlight unit, and include but are not limited to polarizer films, retardation films, brightness enhancing films, diffuser films, reflective films, turning films, and films with integral structures, e.g., brightness enhancing integral polarizer films. In one embodiment, the film is used as an anti-reflection coating layer to reduce unwanted reflections from surfaces of spectacle and photographic lenses. In another embodiment, the film is used as a reflector coating layer to reflect greater than 99% of the light which falls on it. In yet another embodiment, the optical substrate is used for turning light in applications such as projection displays, traffic signals, and illuminated signs.

The optical substrate may be used in LCD displays in any of the following forms, including but not limited to: reflector sheets, diffuser plates, brightness enhancement films, reflective polarizers, etc., depending on the desired performance and cost. The LCD displays may further comprise other components such as light guides or light sources such as cold-cathode fluorescent lights (CCFLs), hot-cathode fluorescent lights (HCFLs), light-emitting diodes (LEDs) or organic light-emitting diodes (OLEDs), with the number of light sources per backlight varying from one or two to thousands of light sources depending on the type of light source and the application.

In one embodiment, the substrate is used in a surface light source application having a light guide plate permitting light to enter from a side end, a light source installed at one end of the plate, and the inventive light diffusing comprising BN particles on an outgoing face of the plate.

In yet another embodiment, the substrate is used in a device comprising: an optical source for generating light, a light guide for guiding the light, a reflective device positioned along the light guide for reflecting the light out of the light guide, a reflective film behind the light guide to reflect escaped light from the cavity back into the light guide, and a series of optical films receptive of the light from the light guide, including a diffuser film. A backlight display device in another embodiment comprises: several optical sources for generating light, a light diffusing plate, a reflective film placed behind the light sources to reflect escaped light from the cavity back into the light diffusing plate, and a series of optical films receptive of the light from the light diffusing plate, including a diffuser film. In one embodiment, the inventive diffusive film comprises about 95 to about 99.8 wt. % polycarbonate as the polymer matrix and about 0.2 to about 5 wt. % boron nitride particles.

The thickness of the optical substrate employing boron nitride will depend on the application but it is typically between 5 µm and 1 cm. In one embodiment, the optical film or sheet has a thickness ranging from 0.025 mm to about 0.5 mm. In one embodiment, the optical film or sheet substrate as a thickness ranging from 1 to 50 mils. In one embodiment, the optical film or sheet has a coating layer comprising boron nitride particles where the coating film has a thickness from 5 to 100 µm. In another embodiment, the coating film has a thickness of from 10 to 40 µm. In yet another embodiment, the optical film / sheet has a thickness of up to 1 cm thick.

Haze is the scattering or diffusion of light as light passes through a transparent material. Haze can be inherent to the material, a result of a formation or molding process, or a result of surface texture (e.g., prismatic surface features). Depending on the amount and the size of the BN particles used, the transmission / haze properties of the optical film or sheet may be tuned / controlled for the appropriate application. In one embodiment of an optical diffuser, a sufficient amount of BN is added to the polymer matrix for the optical film or sheet to have high transmission and high haze. In yet another embodiment, a sufficient amount of BN of the appropriate particle sizes is added to the polymer matrix for the film or sheet to have a high transmission and a low haze. In yet another embodiment, the optical properties are tuned such that the film or sheet has high reflectance and low haze. In one embodiment, the diffuser film or sheet has a percent transmittance of at least 70% and a haze of at least 10%. In yet another embodiment, a light diffusing film or sheet is so constructed to have a haze of 85 to 95% and a total light transmittance of 80 to 90%.

In one embodiment and with the addition of the boron nitride particles of the invention, the diffusion of light emanating therefrom may be improved. Diffusion of light can be measured through modulation transfer ratio (MTR). In the MTR test, the higher the modulation ratio, the higher the contrast. MTR is a ratio calculated from the intensity profile (ratio of max and min intensity), i.e., a measure of how blurred the profile is. The "mean" is the average intensity of the profile, or a measure of how much light is transmitted through. In one embodiment, the optical film is used as a diffuser film in an LCD with an MTR of less than 500. In a second embodiment, the inventive diffuser film has an MTR of less than 300. In a third embodiment, the inventive diffuser film incorporates a sufficient amount of submicron BN particles for the film to have an MTR of less than 100.

In one embodiment, the boron nitride particles have an average primary particle size of nanometer scale and have minimal diffusing function when incorporated into the matrix material. They are use primarily to increase the refractive index of the matrix material. The inventive optical film is used as a brightness enhancing film with a refractive index of at least 1.50. In a second embodiment, a sufficient amount of boron nitride is used for the inventive brightness enhancing film to have a refractive index of at least 1.55. In a third embodiment, the inventive brightness enhancing film employing boron nitride has a refractive index of at least 1.60.

In one embodiment of a volumetric diffuser, the boron nitride particles are sub-micron scale having large diffusing function when incorporated into the matrix material.

In one embodiment of a light diffuser substrate wherein large boron nitride particles are used, the optical film for use as a light diffusing substrate is characterized as having excellent surface roughness. In one embodiment of the invention with boron nitride fillers having an average primary particle size of less than 4 µm, the film has a center line average roughness Ra of 0.1 µm or less, a ten-point average roughness Rz of 1 µm or less, and a maximum height surface roughness Rmax of 1 µm or less. In another embodiment with boron nitride fillers having an average primary particle size of less than 2 µm, the surface roughness is characterized as having a ten-point average roughness Rz of 0.5 µm or less, and a maximum height surface roughness of Rmax of 5 µm or less. In yet another embodiment with boron nitride fillers having an average primary particle size of less than 1 µm, the surface roughness is characterized as having a ten-point average roughness Rz of 0.3 µm or less.

In one embodiment, the optical film is used as a brightness enhancing film, having a surface containing a plurality of raised optical structures. In one embodiment, the raised features are in the form of a regular repeating pattern of symmetrical tips and grooves as illustrated in US Patent Publication No. 20050059766. In another embodiment for a brightness enhancing film, the film is characterized as having a three-dimensional surface defined by a surface structure function modulated by a random, or at least pseudo-random function as disclosed in US Patent Publication No. 20060256444. The height of the optical structures in the above embodiments will also depend on the application but are typically between 100 nm and 5 µm.

The invention is further illustrated by the following non-limiting examples:

Example 1: BN powder having an average primary particle size of 243 nm is compared with TiO₂ having an average primary particle size of 170 nm. TiO₂ is a filler used in optical films of the prior art. MTR measurements are made comparing compositions containing submicron BN particles OR TiO₂ per formulations below. In a third formulation, the BN amount was reduced by one half and replaced with Tospearl 3210, a silicone microsphere from Momentive Performance Materials.

MTR and mean values are in pixel units. MTR values reflect diffusivity with lower numbers representing higher degree of blurring. The "mean" intensity refers to the total transmitted light which is the spatial average over the measurement area. Since both these films have 50% total transmission, the mean values are similar.

In the formulation, the following ingredients were used: 10% particles, 10% SF1528 (Momentive Performance Materials), 22.8% 600 M cstk PDMS, and 57.2% D5. The formulations were drawn out forming films of 25 microns in wet thickness. In transmission tests, both films have comparable transmission of~ 50%. The results indicate: a) an MTR of 3766 (with a mean of 1537) for a mask / film with no additive; b) an MTR of 550 (with a mean of 356) for the formulation containing TiO2; c) an MTR of 6 (with a mean of 349) for the formulation containing the sub-micron BN; and d) an MTR of 580 (with a mean of 377) for the formulation containing BN and Tospearl 3120.

Example 2. The composition of the formulation in each example is shown in Table 1.

**Table 1. Formulation compositions for Example 2**

| Formulation | EM210 (g) | 624-100 (g) | 601A-35 (g) | Chivacure BP (g) |
|---|---|---|---|---|
| A | 40 | 60 | 0 | 3 |
| B | 40 | 60 | 1 | 3 |
| C | 40 | 60 | 3 | 3 |
| D | 40 | 60 | 5 | 3 |
| E | 40 | 60 | 7 | 3 |
| F | 40 | 60 | 10 | 3 |

EM210® (2-phenoxy ethyl acrylate, commercially available from Eternal Corp.) and 624-100® (epoxy acrylate, sold by Eternal Corp.) are mixed with the weight ratios reported in Table 1 and stirred with addition of photoinitiators (benzophenone, Chivacure® BP, from Two Bond Chemicals). In the next step, Boron Nitride PolarTherm PT120 (commercially available from Momentive Performance Materials) is added to the resultant mixture to form a colloidal coating composition. The colloidal coating composition is then coated onto a PET substrate (U34, commercially available from TORAY Corp.) to give an optical film with a thickness of 25 µm after drying.

The resulting optical films are tested for refractive index and thermal conductivity. The refractive indexes of the coatings with the incorporation of boron nitride particles on the surface of the substrate are almost the same as that of the coating without the incorporation of the boron nitride particles, whereas the thermal conductivity increases at least 10%. Therefore, cracks, waves and deformation of the light-focusing structure on the optical film can be avoided with the addition of boron nitride so as to enhance the brightness of the panel boards of LCDs.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

All citations referred herein are expressly incorporated herein by reference.

## Claims

1. An optical substrate containing at least a layer comprising:
a polymeric matrix or glass matrix;
a plurality of boron nitride particles;
wherein the boron nitride particles are present in an amount ranging from 0.1 to 10 wt. % based on the total weight of the at least a layer.

2. The optical substrate of claim 1, wherein the boron nitride particles are present in an amount ranging from 0.2 to 10 wt.% based on the total weight of the at least a layer.

3. The optical substrate of any of claims 1-2, wherein the boron nitride particles are present in an amount ranging from 0.2 to 8 wt. % based on the total weight of the at least a layer.

4. The optical substrate of any of claims 1-3, wherein the boron nitride particles have an average primary particle size of 5 to 500 µm.

5. The optical substrate of any of claims 1 - 4, wherein the boron nitride particles have an average primary particle size of 0.10 to 0.8 µm.

6. The optical substrate of any of claims 1-4, wherein the boron nitride particles have an average primary particle size of 5 to 50 nm.

7. The optical substrate of any of claims 1 - 6, wherein the boron nitride particles comprise spherical agglomerates of hBN platelets having an average agglomerate size distribution in the range of 30 to 125 µm.

8. The optical substrate of any of claims 1 - 7, wherein the boron nitride particles have a BET surface area of 100 m²/g to 900 m²/g.

9. The optical substrate of any of claims 1-8, wherein the boron nitride particles comprise spherical agglomerates of hBN platelets.

10. The optical substrate of any of claims 1 - 9, wherein the boron nitride particles comprise hBN platelets having an average aspect ratio in a range of 50 to 300.

11. The optical substrate of any of claims 1 - 10, wherein the at least a layer comprising the plurality of boron nitride particles is a coating layer comprising at least one of: epoxy diacrylate, halogenated epoxy diacrylate, methyl methacrylate, isobomyl acrylate, 2-phenoxy ethyl acrylate, acrylamide, styrene, halogenated styrene, acrylic acid, acrylonitrile, methacrylonitrile, biphenylepoxyethyl acrylate, halogenated biphenylepoxyethyl acrylate, alkoxylated epoxy diacrylate, halogenated alkoxylated epoxy diacrylate, aliphatic urethane diacrylate, aliphatic urethane hexaacrylate, aromatic urethane hexaacrylate, bisphenol-A epoxy diacrylate, novolac epoxy acrylate, polyester acrylate, polyester diacrylate, acrylate-capped urethane oligomer, and mixtures thereof.

12. The optical substrate of any of claims 1 - 1 1, wherein the optical substrate is a film or sheet having a thickness of 5 µm to 1 cm.

13. The optical substrate of any of claims 1 - 12, wherein the matrix comprises a polymeric material selected from the group of styrene-acrylonitrile, cellulose acetate butyrate, cellulose acetate propionate, cellulose triacetate, polyether sulfone, polymethyl methacrylate, polyurethane, polyester, polycarbonate, polyvinyl chloride, polystyrene, polyethylene terephthalate, polyimide, polyolefin, polycyclo-olefins, polyurethane resin; triacetate cellulose, polyethylene naphthalate, copolymers or blends based on naphthalene dicarboxylic acids, and mixtures thereof.

14. The optical substrate of any of claims 1-13, wherein the at least a layer comprising the plurality of boron nitride particles is a coating layer having a thickness of about 5 µm to 1 cm.

15. The optical substrate of any of claims 1 - 16, wherein the substrate has a prismatic surface or a planar surface.

16. The optical substrate of any of claims 1-15, wherein the substrate is one of a brightness enhancing film or a diffuser film having an MTR of less than 300.

17. A backlight display device comprising: at least a light source, one or more optical films or sheets receptive of the light from the light source,
wherein at least one of the optical films or sheets comprises 90 to about 99.8 wt. % of a polymer for a base matrix and about 0.1 to about 10 wt. % boron nitride particles based on the total weight of the polymer matrix and the boron nitride particles have a refractive index of at least 1.65 along an ab plane.

18. The backlight display device of claim 17, wherein the diffuser film has an MTR of less than 300.

19. The backlight display device of any of claims 17 - 18, wherein the matrix comprises a polymeric material selected from the group of styrene-acrylonitrile, cellulose acetate butyrate, cellulose acetate propionate, cellulose triacetate, polyether sulfone, polymethyl methacrylate, polyurethane, polyester, polycarbonate, polyvinyl chloride, polystyrene, polyethylene terephthalate, polyimide, polyolefin, polycyclo-olefins, polyurethane resin, triacetate cellulose, polyethylene naphthalate, copolymers or blends based on naphthalene dicarboxylic acids, and mixtures thereof.

20. The backlight display device of any of claims 17 - 19, wherein the boron nitride particles have an average primary particle size of less than 1 µm and a BET surface area of at least 100 m²/g.

21. A method of preparing an optical substrate, the method comprising
providing a plurality of boron nitride particles which are surface modified by at least one of silanes, silazanes, siloxanes, and the like; alcohols; amines; carboxylic acids; sulfonic acids; phospohonic acids; zirconates; titanates, and mixtures thereof; wherein the boron nitride particles have an average primary particle size ranging from 0.10 to 200 µm;
preparing a coating composition comprising the surface-modified boron nitride particles and a polymeric matrix;
contacting the coating composition with a micro-replication tool; and
polymerizing the coating composition to form an optical layer having a microstructured surface.

22. A method of preparing an optical substrate, the method comprising
blending a mixture of 0.1 to about 10 wt. % boron nitride with 90 to about 99.8 wt. % of a polymer selected from the group of a polymeric material selected from the group of styrene-acrylonitrile, cellulose acetate butyrate, cellulose acetate propionate, cellulose triacetate, polyether sulfone, polymethyl methacrylate, polyurethane, polyester, polycarbonate, polyvinyl chloride, polystyrene, polyethylene terephthalate, polyimide, polyolefin, polycyclo-olefins, polyurethane resin, triacetate cellulose, polyethylene naphthalate, copolymers or blends based on naphthalene dicarboxylic acids, and mixtures thereof;
forming the optical substrate through one of extrusion, injection molding, or solvent casting.
